(19) Europäisches Patentamt / European Patent Office / Office européen des brevets

(11) **EP 2 030 357 B1**

(12) **FASCICULE DE BREVET EUROPEEN**

(45) Date de publication et mention
de la délivrance du brevet:
**12.01.2011 Bulletin 2011/02**

(21) Numéro de dépôt: **07731439.1**

(22) Date de dépôt: **11.05.2007**

(51) Int Cl.:
***H04L 1/06*** (2006.01)

(86) Numéro de dépôt international:
**PCT/FR2007/000798**

(87) Numéro de publication internationale:
**WO 2007/132084 (22.11.2007 Gazette 2007/47)**

(54) **PROCÉDÉ DE DÉCODAGE DE CODES SPATIO-TEMPORELS 2X2 DE TYPE GOLDEN CODE**

VERFAHREN ZUM DECODIEREN VON RÄUMLICH-ZEITLICHEN 2X2-CODES VON DEM GOLDEN-TYPE-CODE

METHOD FOR DECODING 2X2 SPATIOTEMPORAL CODES OF THE GOLDEN TYPE CODE

(84) Etats contractants désignés:
**AT BE BG CH CY CZ DE DK EE ES FI FR GB GR
HU IE IS IT LI LT LU LV MC MT NL PL PT RO SE
SI SK TR**
Etats d'extension désignés:
**AL BA HR MK RS**

(30) Priorité: **17.05.2006 FR 0604429**

(43) Date de publication de la demande:
**04.03.2009 Bulletin 2009/10**

(73) Titulaire: **Comsis
75014 Paris (FR)**

(72) Inventeur: **CHAMPION, David
F-75014 Paris (FR)**

(74) Mandataire: **Pontet, Bernard
Pontet Allano & Associés s.e.l.a.r.l.
25, Rue Jean Rostand
Parc Club Orsay Université
91893 Orsay Cedex (FR)**

(56) Documents cités:
- **MURUGAN A D ET AL: "A unified framework for tree search decoding: rediscovering the sequential decoder" IEEE Transactions on Information Theory IEEE USA, vol. 52, no. 3, mars 2006 (2006-03), pages 933-953, XP002421123 ISSN: 0018-9448 cité dans la demande**
- **OUSSAMA DAMEN ET AL: "Lattice Code Decoder for Space-Time Codes" IEEE COMMUNICATIONS LETTERS, IEEE SERVICE CENTER, PISCATAWAY, NJ, US, vol. 4, no. 5, mai 2000 (2000-05), pages 161-163, XP011083880 ISSN: 1089-7798**
- **HESHAM EL GAMAL GIUSEPPE CAIRE MOHAMED OUSSAMA DAMEN: "On the Optimality of Incremental Redundancy LAST Coding" WIRELESS NETWORKS, COMMUNICATIONS AND MOBILE COMPUTING, 2005 INTERNATIONAL CONFERENCE ON MAUI, HI, USA 13-16 JUNE 2005, PISCATAWAY, NJ, USA,IEEE, 13 juin 2005 (2005-06-13), pages 1472-1476, XP010888178 ISBN: 0-7803-9305-8**
- **BELFIORE J-C ET AL: "The Golden Code: A 2 x 2 Full-Rate Space-Time Code With Nonvanishing Determinants" IEEE TRANSACTIONS ON INFORMATION THEORY, IEEE SERVICE CENTER, PISCATAWAY, NJ, US, vol. 51, no. 4, avril 2005 (2005-04), pages 1432-1436, XP011129052 ISSN: 0018-9448 cité dans la demande**

**Description**

La présente invention se rapporte à un procédé de décodage d'un vecteur Y de codes spatio-temporels 2x2 de type Golden Code. La présente invention peut également s'appliquer à des codes spatio-temporels 2x2 vérifiant les conditions suivantes :

- le code dispose d'une structure en deux couches ou « layers »,
- chaque layer représente le plongement canonique d'un idéal principal de l'anneau des entiers $\alpha \mathbf{Z[i}, \theta \mathbf{]}$ d'un corps de nombres $\mathbf{Q[i}, \theta \mathbf{]}$ de degré 2 par rapport à $\mathbf{Q[i]}$,
- la matrice du plongement canonique est proportionnelle à une matrice unitaire.

D'une façon générale, dans un système de communications sans fils, utilisant les ondes électromagnétiques comme support physique de transmission, les réflexions multiples (trajets multiples) dues aux différents obstacles dans l'espace de propagation (propagation en milieu urbain ou en milieu « indoor ») induisent des phénomènes d'évanouissement du signal, c'est-à-dire que sur toute une plage de fréquence, il est possible d'observer des interférences destructives. Le déplacement relatif de l'environnement par rapport à l'émetteur et au récepteur rend ces phénomènes d'évanouissement stochastiques. De tels canaux à évanouissements pénalisent considérablement les performances de systèmes de communications numériques classiques. Pour lutter efficacement contre les phénomènes d'évanouissements, il est nécessaire que le récepteur dispose de plusieurs répliques contenant l'information émise, répliques qui ont subi des évanouissements indépendants entre eux. La notion de diversité réfère à la création de ces répliques et l'ordre de diversité est défini comme le nombre de répliques « indépendantes » dont dispose le récepteur. Citons des exemples de diversité : la diversité temporelle (l'information est répétée avec un écart temporel supérieur à l'intervalle de cohérence pour qu'il y ait décorrélation entre les répliques), la diversité fréquentielle, la diversité de trajets dans des systèmes CDMA, la diversité d'antennes en réception. Depuis 1996, un nouveau procédé de codage, baptisé codage Spatio-Temporel, utilisant plusieurs antennes en émission et en réception, a permis l'exploitation d'une nouvelle forme de diversité : la diversité d'antennes en émission. Le codage Spatio-Temporel n'est pas la seule technique ayant recours à plusieurs antennes en émission et en réception : ces techniques sont regroupées sous la dénomination *MIMO (Multiple Input Multiple Output).* Le recours au codage Spatio-Temporel sur plusieurs antennes améliore considérablement les performances (grâce à la diversité) et le débit d'information (grâce au multiplexage) des systèmes de télécommunications dans un milieu présentant des évanouissements (« *fading channel* »).

Parmi l'ensemble des codes Spatio-Temporels cohérents (c'est-à-dire que le récepteur dispose d'une connaissance parfaite ou au moins d'une estimation des coefficients de canaux) utilisant deux antennes en émission connus à l'heure actuelle, l'un des plus performants est le *Golden Code* tel que décrit dans le document : J. C. Belfiore, G. Rekaya et E. Viterbo, « The Golden Code: A 2x2 Full-Rate Space-Time Code with Non-Vanishing Determinants," IEEE Trans. Inform. Theory (Avril 2005). En effet, le *Golden Code* est un code à diversité maximale (la diversité d'émission est de 2) et à multiplexage maximale (2 symboles par utilisation canal). De plus, il présente l'un des gains de codage les plus élevés (quelque soit la constellation utilisée). De plus, il a été démontré récemment que le *Golden Code* peut être utilisé sur un « *Amplify and Forward Relay Channel* » avec un relais et une antenne et qu'il permet de tirer parti de la diversité de collaboration.

Le *Golden Code* ne présente d'excellentes performances que pour un décodage au Maximum de Vraisemblance. Comme pour de nombreux codes Spatio-Temporels (les codes linéaires), le décodage au Maximum de Vraisemblance du *Golden Code* se ramène à la recherche au sein d'une région (la région de *shaping*) d'un lattice (de dimension 8 pour le *Golden Code*), lattice qui change suivant les coefficients de canaux, du point le plus proche du point reçu. Pour ce faire des algorithmes de recherche du point le plus proche au sein d'un lattice ont été adaptés au décodage de codes Spatio-Temporels : le *Sphere Decoder* et l'énumération de *Schnorr-Euchner.* Ces algorithmes nécessitent un nombre fortement variable d'itérations et se prêtent donc difficilement à une implémentation matérielle fonctionnant en temps réel. Des accélérations de ces algorithmes grâce à des prétraitements, en particulier des réductions de base de type LLL, ont déjà été étudiées.

Etant donnée la complexité du décodage au Maximum de Vraisemblance, des algorithmes sous-optimaux de décodage de codes Spatio-Temporels ont été développés. Certains de ces algorithmes émanent de l'égalisation et de l'annulation d'interférences : c'est le cas des algorithmes ZF *(Zero Forcing),* MMSE *(Minimum Mean Square Error),* ZF-DFE *(Decision Feedback Equalizer)* décrit dans : J. Foschini, G. Golden, R. Valenzuela et P. Wolniansky, « Simplified processing for high spectral efficiency wireless communication employing multi-element arrays », IEEE Journal on Selected Areas Communications, vol. 17, p 1841-1852, Novembre 1999, de l'algorithme de décodage du V-BLAST. Cependant, ces décodeurs ne permettent pas de tirer parti ni de la diversité d'émission ni de la diversité de réception.

Récemment, des algorithmes sous optimaux à faible complexité ont été proposés. Ils utilisent les algorithmes MMSE ou ZF combinés avec une réduction de base LLL. Grâce au LLL, ces algorithmes permettent l'exploitation de l'intégralité de la diversité, ce qui n'est pas le cas en l'absence de ce prétraitement. Dans le document : A. D. Murugan, H. El Gamal, M. O. Damen et G. Caire, « A Unified Framework for Tree Search Decoding : Rediscovering the Sequential Decoder », IEEE Transactions on Information Theory, vol. 52, no. 3, Mars 2006, il a été démontré l'intérêt d'utiliser le filtrage MMSE-GDFE comme prétraitement pour pouvoir effectuer un décodage dans le lattice sans tenir compte de la contrainte de *« shaping »* et exploiter les algorithmes de réduction tels que le LLL. De plus, un formalisme général de recherche au sein d'un arbre a été proposé, permettant ainsi de décrire toutes les techniques issues du décodage au sein d'un lattice et d'introduire des techniques de décodage séquentiel.

Cependant, même cette dernière technique ne permet pas d'optimiser les avantages du Golden Code.

Un but de la présente invention est de proposer un nouveau décodeur tirant parti de la diversité d'un Golden code. Un autre but de l'invention est de concevoir un décodeur spatio-temporel temps réel.

On atteint a moins l'un des objectifs précités avec un procédé de décodage d'un vecteur Y de codes spatio-temporels 2x2 de type Golden Code, ledit procédé comprenant les étapes suivantes:

- on réalise un filtrage de type MMSE-GDFE de façon à obtenir un vecteur $Y^F$=RX + W, avec $Y^F$ le vecteur Y filtré au moyen d'une matrice de filtre F (« forward filter »), R une matrice conventionnelle nommée « backward filter », X le vecteur émis et W la matrice bruit complexe,
- on réalise un recentrage de constellation de sorte que le vecteur à déterminer devient Z tel que Z=$Y^F$-$2K_M$RΓ$S_0$=$2K_M$RΓS+W , $K_M$ étant la constante de normalisation de la constellation considérée, r étant le Golden Code, et S le vecteur des symboles d'information,
- on réalise une étape de permutation des éléments des matrices Z, R et r de façon à obtenir $\tilde{Z}$ , $\tilde{R}$ et $\tilde{\Gamma}$ tels que $\tilde{R}^H$R est une matrice en forme de X, et on déplace le nombre complexe « i » de r vers R, et

- on réalise une étape de réduction de base de lattice telle que $\tilde{Z}$ =$2K_M$ΨΓS'+W avec $\tilde{\Psi}$=$\tilde{R}.\Delta_\alpha(x^1, x^2, x^3, x^4)$ et

$$S' = \Pi_\alpha^{-1}(x^1, x^2, x^3, x^4).S ,$$

$\Pi_\alpha(x^1, x^2, x^3, x^4)$ étant une matrice de changement de base, $\Pi_\alpha(x^1, x^2, x^3, x^4)$ est la matrice associée à $\Delta_\alpha(x^1, x^2, x^3, x^4)$ qui est une matrice dont le module de déterminant est égale à 1 et définie telle que $\Delta_\alpha^H \Delta_\alpha$ est une matrice en forme de X,

- on applique l'algorithme de décodage ZF-DFE dans lequel on identifie parmi les quatre éléments de Z, deux couches ou « layers », chaque couche comprenant les deux éléments de la diagonale ou l'anti-diagonale de $\tilde{Z}$; on applique l'algorithme DFE couche par couche, et on applique l'algorithme ZF au sein de chacune des couches.

Les algorithmes de décodage de l'art antérieur présentent des performances comparables au Maximum de Vraisemblance traitent le décodage du *Golden Code* comme celui d'un lattice quelconque de dimension 8. Ils ne prennent pas en compte deux spécificités de sa structure : sa construction en 2 *« layers »* et la structure algébrique de chacun de ces deux *layers.* La présente invention propose d'effectuer un décodage layer par layer (à la méthode d'un DFE), ramenant le problème à une dimension 2. Le décodage au sein de chaque layer s'effectue par une technique simple de ZF après une réduction algébrique. Une telle technique de décodage en *layers* présente l'avantage de manipuler à chaque étape des matrices 2x2 diagonales ou connues à l'avance. Pour obtenir des performances proches du Maximum de Vraisemblance, on effectue avantageusement une réduction capable de combiner les deux *layers* avant de les décoder un par un. Les techniques de réductions classiques (LLL ou Korkhine-Zolotareff par exemple) détruisent la structure en *layers.* C'est pourquoi, une nouvelle forme de réduction, baptisée réduction algébrique, peut être utilisée.

Selon une caractéristique avantageuse de l'invention, la permutation de Z est la suivante :

$$\tilde{Z} = \begin{bmatrix} z_{1,1} \\ z_{2,2} \\ z_{1,2} \\ z_{2,1} \end{bmatrix} \text{ avec la convention suivante } Z = \begin{bmatrix} z_{1,1} \\ z_{2,1} \\ z_{1,2} \\ z_{2,2} \end{bmatrix}.$$

Dans cette permutation, la première couche ou « layer » est constituée par le premier et le dernier éléments de Z. La seconde layer est constituée par le second et le troisième éléments de Z.

Avantageusement, $\tilde{R}$ est une matrice en forme de X telle que :

$$\tilde{R} = \begin{bmatrix} r_{1,1}^1 & 0 & 0 & i.r_{1,2}^1 \\ 0 & r_{2,2}^2 & r_{2,1}^2 & 0 \\ 0 & r_{1,2}^2 & r_{1,1}^2 & 0 \\ r_{2,1}^1 & 0 & 0 & i.r_{2,2}^1 \end{bmatrix} \quad et \quad \tilde{\Gamma} = \frac{1}{\sqrt{5}} \begin{bmatrix} \alpha & \alpha\theta & 0 & 0 \\ \overline{\alpha} & \overline{\alpha}\overline{\theta} & 0 & 0 \\ 0 & 0 & \alpha & \alpha\theta \\ 0 & 0 & \overline{\alpha} & \overline{\alpha}\overline{\theta} \end{bmatrix},$$

$\alpha$ et $\theta$ étant des coefficients de Golden Code tels que : $\quad \theta = \dfrac{1+\sqrt{5}}{2}, \quad \overline{\theta} = \dfrac{1-\sqrt{5}}{2}, \quad \alpha = 1 + i - i.\theta, \overline{\alpha} = 1 + i - i.\overline{\theta}$

De préférence :

$$\Delta_\alpha(x^1, x^2, x^3, x^4) = \begin{bmatrix} x^1 & 0 & 0 & \dfrac{\alpha}{\overline{\alpha}} x^4 \\ 0 & \overline{x}^1 & \dfrac{\overline{\alpha}}{\alpha} \overline{x}^4 & 0 \\ 0 & \dfrac{\alpha}{\overline{\alpha}} \overline{x}^2 & \overline{x}^3 & 0 \\ \dfrac{\overline{\alpha}}{\alpha} x^2 & 0 & 0 & x^3 \end{bmatrix}$$

et

$$\Pi_\alpha(x^1, x^2, x^3, x^4) = \begin{bmatrix} x_1^1 & x_2^1 & x_1^4 & x_1^4 - x_2^4 \\ x_2^1 & x_1^1 + x_2^1 & x_2^4 & -x_1^4 \\ x_1^2 + x_2^2 & x_1^2 + 2.x_2^2 & x_1^3 + x_2^3 & -x_2^3 \\ -x_2^2 & -x_1^2 - x_2^2 & -x_2^3 & x_1^3 \end{bmatrix}$$

où $\forall j\ 1 \le j \le 4$ $\quad x^j = x_1^j + \theta.x_2^j \quad (x_1^j$ et $x_2^j \in \mathbf{Z[i]})$.

Selon un mode de mise en oeuvre avantageux de l'invention, on détermine $\Delta_\alpha$ de façon à ce que, lors d'une décomposition QR, les deux éléments d'une même couche soient sensiblement de même valeur. On définit ainsi un premier critère d'équilibre au sein de chaque layer.

Selon encore un autre mode de mise en oeuvre avantageux de l'invention, $\tilde{Z}$ étant définie en deux couches, une première couche composée des éléments sur la diagonale et une seconde couche composée des éléments sur l'anti-diagonale, on détermine $\Delta_\alpha$ de façon à ce que, lors d'une décomposition QR, le produit des deux éléments de la seconde couche soit supérieur au produit des deux éléments de la première couche. On définit ainsi un second critère de maximisation de la puissance du second layer.

Par ailleurs, lors de l'application de l'algorithme ZF pour la seconde couche, on extrait de préférence p candidats possibles, ensuite lors de l'application de l'algorithme ZF pour la première couche on extrait également p candidats possibles, puis on détermine le meilleur candidat vecteur à l'issue de l'algorithme global ZF-DFE. Avantageusement, p est égal à 2.

La présente invention s'applique avantageusement lorsque $\tilde{R}$ et $\Delta_\alpha$ sont des matrices en X ou en losange.

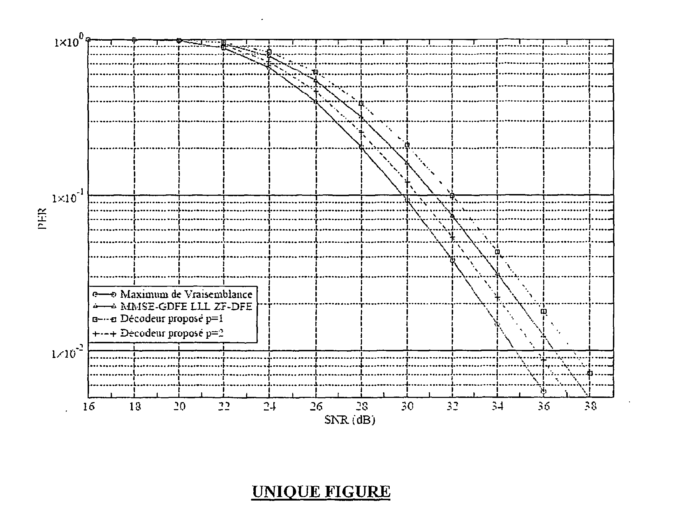

D'autres avantages et caractéristiques de l'invention apparaîtront à l'examen de la description détaillée d'un mode de mise en oeuvre nullement limitatif, et l'unique figure annexée. Cette figure est une courbe des performances d'un décodeur selon l'invention par rapport à un décodeur de l'art antérieur et un décodeur à Maximum de Vraisemblance.

Pour la suite de la description, on utilisera les notations et conventions suivantes:

- Tous les ensembles en gras
- **Z** l'anneau des entiers relatifs
- **Q** le corps des rationnels
- **R** le corps des réels
- i défini par $i^2$ = -1
- **C** le corps des complexes
- **Q[i]** le corps défini par **Q[i]**= {x+i.y avec (x,y) ∈ **Q**$^2$}
- **Z[i]** l'anneau défini par **Z[i]** = (x+1.y avec (x, y) ∈ **Z**$^2$) (anneau des entiers de Gauss)
- **Q[θ]** le corps d'extension algébrique de **Q** généré par θ
- **Z[θ]** l'anneau des entiers algébriques du corps de nombres **Q[θ]**
- θ un entier algébrique de degré 2
- **Q[i,θ]** le corps d'extension algébrique de **Q[i]** généré par θ. C'est une extension algébrique de **Q** de degré 4.
- **Z[i,θ]** l'anneau des entiers algébriques du corps de nombres **Q[1,θ]**
- R(x) la partie réelle d'un complexe x
- J(x) la partie imaginaire d'un complexe x
- x* complexe conjugué de x
- **GL$_n$(E)** l'ensemble des matrices carrées de dimension n inversibles à coefficients dans **E** (où **E** est un anneau) et dont l'inverse est aussi à coefficients dans **E**
- I$_n$ la matrice identité de dimension n
- X$^T$ la matrice transposée de la matrice X
- X$^H$ la matrice transposée conjuguée de la matrice X
- [x] le plus grand entier relatif inférieur ou égal à x
- ln (x) le logarithme népérien de x pour x > 0

E(.) l'espérance.

On va maintenant décrire le principe du Golden Code.

Pour une constellation M$^2$ QAM, le *Golden Code* (noté Γ$_M$) est l'ensemble fini des matrices 2x2 à coefficients complexes défini comme suit :

$$\Gamma_M = \left\{ \frac{1}{\sqrt{5}} \begin{bmatrix} \alpha.(a+b.\theta) & \alpha.(c+d.\theta) \\ i.\bar{\alpha}.(c+d.\bar{\theta}) & \bar{\alpha}.(a+b.\bar{\theta}) \end{bmatrix} \text{ avec } a,b,c,d \in \mathbf{M^2QAM} \right\}$$

$$\text{Où } \theta = \frac{1+\sqrt{5}}{2}, \ \bar{\theta} = \frac{1-\sqrt{5}}{2}, \ \alpha = 1+i-i.\theta, \ \bar{\alpha} = 1+i-i.\bar{\theta}$$

$$\text{et } \mathbf{M^2QAM} = \left\{ K_M \big( (2.k+1-M)+i.(2.n+1-M) \big) \big| (k,n) \in \{0,...,M-1\}^2 \right\}$$

où est la constante de normalisation de la M$^2$ QAM.

Dans le contexte du MIMO, la notation matricielle s'interprète de la manière suivante : si on émet un mot X du *Golden Code* (X ∈ Γ$_M$) cela signifie que:

- $x_{1,1}$ est émis par l'antenne i=1 à l'instant t=1.
- $x_{1,2}$ est émis par l'antenne i=1 à l'instant t=2.
- $x_{2,1}$ est émis par l'antenne i=2 à l'instant t=1.
- $x_{2,2}$ est émis par l'antenne i=2 à l'instant t=2.

En considérant Γ$_M$ dans **R$^8$** (ou **C$^4$**), le *Golden Code* peut être vu comme une portion d'un lattice de dimension 8 (ou de dimension 4 complexe) décentrée et délimitée par une région de *shaping.* Pour ce faire, il suffit de réécrire Γ$_M$ de la manière suivante :

$$\Gamma_M = \left\{ \frac{2.K_M}{\sqrt{5}} \begin{bmatrix} \alpha.(s_1 + s_2.\theta) & \alpha.(s_3 + s_4.\theta) \\ i.\overline{\alpha}.(s_3 + s_4.\overline{\theta}) & \overline{\alpha}.(s_1 + s_2.\overline{\theta}) \end{bmatrix} + \frac{K_M.(1+i).(1-M)}{\sqrt{5}} \begin{bmatrix} \alpha.(1+\theta) & \alpha.(1+\theta) \\ i.\overline{\alpha}(1+\overline{\theta}) & \overline{\alpha}.(1+\overline{\theta}) \end{bmatrix} \\ \text{avec } (s_1, s_2, s_3, s_4) \in \mathbf{Z[i]}^4 \cap \mathbf{Q}_M^4 \right\}$$

où $\mathbf{Q_M} = [0;M\text{-}1] + i.[0;M\text{-}1]$

Par la suite, le vecteur des symboles d'information est noté $S = (s_1, s_2, s_3, s_4)^T$. Il est évident que la détermination du mot du *Golden Code* émis est équivalente à la détermination du vecteur S de $\mathbf{Z[i]}^4$ dans la région de *shaping* $\mathbf{Q_M}^4$.

Avantageusement, un mot du *Golden Code* est constitué de deux *layers :*

- le couple $(x_{1,1}, x_{2,2})$ forme le *layer* 1, qui ne dépend que du couple $(s_1, S_2)$
- le couple $(x_{1,2}, x_{2,1})$ forme le *layer* 2, qui ne dépend que du couple $(s_3, s_4)$;

On reprend ci-dessous le critère « idéaliste » de décodage au Maximum de Vraisemblance

Considérons le cas d'un récepteur possédant N antennes de réception ($N \geq 2$). Dans le cas d'un canal MIMO Flat Fading (qui est éventuellement différent entre l'instant 1 et l'instant 2), si l'on suppose qu'un mot du *Golden Code* X a été émis, les signaux reçus $y_{j,t}$ par l'antenne j ($1 \leq j \leq N$) à l'instant t ($1 \leq t \leq 2$) peuvent s'écrire sous la forme:

$$y_{j,t} = h_{j,1}^t.x_{1,t} + h_{j,2}^t x_{2,t} + b_{j,t} \quad (Equation \ 1)$$

où $h_{ji}^t$ désigne le coefficient de canal entre l'antenne d'émission i et l'antenne de réception j à l'instant t et $b_{j,t}$ le bruit complexe sur l'antenne de réception j à l'instant t. Le bruit complexe est supposé Gaussien centré circulairement symétrique de variance $N_0$ (la partie réelle et la partie imaginaire ont pour variance $N_0/2$) et indépendant suivant l'espace (suivant j) et le temps (suivant t) c'est-à-dire:

$E(b_{j,t}b^*_{j',t'}) = N_0\delta_{t,t'}\delta_{j,j'}$

où $\delta_{t,t'}$ désigne le symbole de Kronecker entre t et t'.

Les coefficients de canaux et la variance du bruit sont supposés connus du récepteur.

L'équation *(1)* peut être réécrite sous forme matricielle:

$$\underbrace{\begin{bmatrix} y_{1,1} \\ \vdots \\ y_{N,1} \\ y_{1,2} \\ \vdots \\ y_{N,2} \end{bmatrix}}_{Y} = \underbrace{\begin{bmatrix} h_{1,1}^1 & h_{1,2}^1 & 0 & 0 \\ \vdots & \vdots & \vdots & \vdots \\ h_{N,1}^1 & h_{N,2}^1 & 0 & 0 \\ 0 & 0 & h_{1,1}^2 & h_{1,2}^2 \\ \vdots & \vdots & \vdots & \vdots \\ 0 & 0 & h_{N,1}^2 & h_{N,2}^2 \end{bmatrix}}_{H} . \begin{bmatrix} x_{1,1} \\ x_{2,1} \\ x_{1,2} \\ x_{2,2} \end{bmatrix} + \underbrace{\begin{bmatrix} b_{1,1} \\ \vdots \\ b_{N,1} \\ b_{1,2} \\ \vdots \\ b_{N,2} \end{bmatrix}}_{B}$$

Or, étant donné que $X \in \Gamma_M$, il existe $S \in \mathbf{Z[i]}^4 \cap$ tel que:

$$\begin{bmatrix} x_{1,1} \\ x_{2,1} \\ x_{1,2} \\ x_{2,2} \end{bmatrix} = 2.K_M \frac{1}{\sqrt{5}} \underbrace{\begin{bmatrix} \alpha & \alpha\theta & 0 & 0 \\ 0 & 0 & i\overline{\alpha} & i\overline{\alpha}\overline{\theta} \\ 0 & 0 & \alpha & \alpha\theta \\ \overline{\alpha} & \overline{\alpha}\overline{\theta} & 0 & 0 \end{bmatrix}}_{\Gamma} .(S + S_0)$$

avec $S_0 = \dfrac{(1+i).(1-M)}{2}\begin{bmatrix}1\\1\\1\\1\end{bmatrix}$

Ainsi, on a:

$$Y = 2.K_M.H.\Gamma.(S+S_0)+B$$

D'où :

$$Y' = Y - 2.K_M.H.\Gamma.S_0 = 2.K_M H.\Gamma.S + B$$

Il est aisé de démontrer que le décodage Maximum de Vraisemblance consiste à décider, connaissant Y' et les coefficients de canaux, que le vecteur émis est le vecteur $\hat{S}$ défini par :

$$\hat{S} = Arg\left(\underset{S\in Z[i]^4 \cap Q_M^4}{Min}\left\|Y'-\Lambda.S\right\|^2\right)$$

avec $\Lambda = 2.K_M.H.\Gamma$

Le décodage au Maximum de Vraisemblance consiste à trouver le point du lattice de dimension 8 réelle (dimension 4 complexe), généré par les colonnes de $\Lambda$, le plus proche de Y', sous la contrainte que les coordonnées de ce point appartiennent à la région de *shaping* $(Q_M^4)$. A condition que la matrice A soit de rang 8 réel (ou rang 4 complexe), un décodage au Maximum de Vraisemblance est réalisable par l'algorithme de Sphere Decoder ou par l'algorithme d'énumération de Schnorr-Euchner tous deux dûment modifiés pour intégrer la contrainte de *« shaping »*.

Selon la présente invention, la première étape est l'application d'un filtre MMSE-GDFE.

La technique de filtrage MMSE-GDFE est une technique de prétraitement couramment utilisée dans le domaine du décodage de codes Spatio-Temporels. Il a été démontré que le filtrage MMSE-GDFE permet de s'affranchir de la contrainte de *shaping,* sans détériorer significativement les performances. De plus, ce filtrage permet de garantir que la matrice de canal virtuelle est de rang plein. En transformant le problème du décodage en celui d'une recherche au sein d'un lattice du point le plus proche d'un point reçu, le filtrage MMSE-GDFE permet de tirer profit des techniques de réduction de base d'un lattice.

Etant donné que la matrice $\Gamma$ du *Golden* Code est une matrice unitaire, la matrice de filtrage MMSE-GDFE peut être déterminée exclusivement grâce à H et à $N_0$ (tous deux supposés connus du récepteur).

La matrice de filtre MMSE-GDFE, notée F (« forward filter ») de la matrice H est la matrice complexe 4x2.N définie par :

$F = (R^H)^{-1}H^H$, R est le filtre de retour : « backward filter », où $\quad (R^H)^{-1} = \begin{bmatrix}(R_1^H)^{-1} & 0\\ 0 & (R_2^H)^{-1}\end{bmatrix}\quad$ avec $R_1$ (resp. $R_2$) matrice complexe triangulaire supérieure 2x2 (dont les termes de la diagonale sont réels positifs) obtenue par décomposition de Cholesky de $H^{1H}H^1 + N_0I_2$ (resp. $H^{2H}H^2 + N_0I_2$).

D'une façon générale, le décodage dans un lattice après filtrage MMSE-GDFE se définit de la manière suivante.

Le vecteur des symboles reçus Y est multiplié par la matrice F, pour obtenir un vecteur complexe de dimension 4, noté $Y^F$:

$$Y^F = F.Y$$

Il est aisé de démontrer que l'on a :

$$Y^F = R.X + W$$

avec W un vecteur bruit complexe de dimension 4, dont chacune des composantes est de variance $N_0$. Les composantes de W sont toujours décorrélées entre elles mais ne sont plus gaussiennes.

Ainsi, on obtient :

$$Z = Y^F - 2.K_M.R.\Gamma.S_0 = 2.K_M.R.\Gamma.S + W = \Lambda^F S + W \quad (Equation\ 2)$$

avec $\Lambda^F = 2.K_M.R.\Gamma$

Dans ce cas, étant donné Z et R, la méthode de décodage consiste à décider que le vecteur émis est le vecteur $\hat{S}$ défini par :

$$\hat{S} = Arg\left(\underset{S \in Z[i]^4 \cap Q_M^4}{Min} \|Z - \Lambda^F.S\|^2\right)$$

Cette méthode de décodage n'est pas équivalente à celle du Maximum de Vraisemblance, mais ne détériore que faiblement les performances tout en garantissant l'inversibilité de la nouvelle matrice génératrice ($\Lambda^F$). De plus, il a été montré dans [21], qu'il n'est pas pénalisant de ne pas tenir compte de la condition de *shaping.* La méthode de décodage consiste alors à décider que le vecteur émis est le vecteur $\hat{S}$ défini par :

$$\hat{S} = Arg\left(\underset{S \in Z[i]^4}{Min} \|Z - \Lambda^F.S\|^2\right)$$

Il s'agit donc bien de trouver le point du lattice généré par les colonnes de $\Lambda^F$ le plus proche de Z.

Si les coordonnées de $\hat{S}$ ne vérifient pas la condition de *« shaping* », il est possible de décider d'un *effacement* ou de ramener $\hat{S}$ dans la région de *shaping* en saturant les coordonnées de $\hat{S}$ qui ne vérifient pas la condition de *shaping.*

Selon l'invention, le décodeur utilise une réduction de base d'un lattice. Le principe général de la réduction de base d'un lattice se définit de la manière suivante.

Soit $\Lambda_R$ une matrice réelle carrée de dimension n et $Z_R$ un point de $\mathbf{R^n}$. Supposons que l'on cherche le point du lattice généré par $\Lambda_R$ le plus proche de $Z_R$, c'est-à-dire que l'on cherche $\hat{S}_R$ dans $\mathbf{Z^n}$ tel que :

$$\hat{S}_R = Arg\left(\underset{S_R \in Z^n}{Min} \|Z_R - \Lambda_R.S_R\|^2\right)$$

Soit $\Pi$ une matrice carrée de dimension n à coefficients entiers unimodulaire ($\Pi \in \mathbf{GL_n(Z)}$ ), alors son inverse $\Pi^{-1}$ est également à coefficients entiers. La matrice $\Pi$ est appelée matrice de changement de base.

On a alors :

$$Z_R - \Lambda_R.S_R = Z_R - \Lambda_R.\Pi.\Pi^{-1}.S_R = Z_R - \Lambda_R'.S_R'$$

avec $\Lambda_R^1 = \Lambda_R.\Pi$ et $S_R' = \Pi^{-1}.S_R$

Ainsi la recherche de $\hat{S}_R$ est équivalente à la recherche de $\hat{S}'_R$ défini par :

$$\hat{S}_R' = \operatorname{Arg}\left(\underset{S_R' \in Z^n}{\operatorname{Min}} \left\| Z_R - \Lambda_R'.S_R' \right\|^2\right)$$

$\hat{S}_R$ est obtenu grâce à la relation : $\hat{S}_R = \Pi.\hat{S}_R'$

Le but de la réduction de base est d'obtenir à partir d'une matrice génératrice $\Lambda_R$ une matrice génératrice équivalente $\Lambda_R'$ (qui génère le même lattice), qui présente de meilleures propriétés d'orthogonalité et de longueur de vecteurs de manière à faciliter la recherche du point le plus proche.

Il existe différents critères de réduction auxquels sont associés des algorithmes pour réaliser ces réductions. Les deux algorithmes de réduction principaux sont : l'algorithme LLL et l'algorithme KZ. L'algorithme LLL est souvent le plus utilisé car moins complexe que le KZ.

Les algorithmes de classement des colonnes de la matrice sont aussi des algorithmes de réduction.

Après filtrage MMSE-GDFE, la réduction de base peut être utilisée pour accélérer les algorithmes optimaux de recherche comme le *Sphere Decoder* ou l'énumération de *Schnorr-Euchner.* De la même manière, tous les algorithmes sous optimaux de recherche dans un arbre peuvent être améliorés grâce à une technique de réduction de base.

Le principe général d'un décodage ZF après filtrage MMSE-GDFE et réduction de base est le suivant.

Après filtrage MMSE-GDFE, on a (cf. *Equation* 2):

$$Z = \Lambda^F.S + W$$

Pour pouvoir utiliser une technique de réduction, il faut travailler sur des matrices et des vecteurs réels. La conversion d'un vecteur complexe (resp. d'une matrice complexe) en vecteur réel (resp. en matrice réelle) s'effectue de la manière suivante :

$$Z_R = \begin{bmatrix} \Re(Z) \\ \Im(Z) \end{bmatrix} \text{ et } \Lambda_R^F = \begin{bmatrix} \Re(\Lambda^F) & -\Im(\Lambda^F) \\ \Im(\Lambda^F) & \Re(\Lambda^F) \end{bmatrix}$$

Dans le cas du *Golden Code,* $Z_R$ est un vecteur de dimension 8 et $\Lambda_R^F$ unie matrice 8x8.

On obtient alors :

$$Z_R = \Lambda_R^F.S_R + W_R$$

Après réduction de la matrice génératrice $\Lambda_R^F$, la matrice réduite est notée $\Lambda_R^F$ et la matrice de changement base $\Pi$.

On a alors :

$$Z_R = \Lambda_R^F'.S_R' + W_R \quad \textit{(Equation 3)}$$

Le mot décodé est défini par $\hat{S}_R = \Pi.\hat{S}_R'$ où $\hat{S}_R'$ est obtenu en arrondissant les coordonnées de $(\Lambda_R^F')^{-1} Z_R.$

Le terme ZF *(Zero Forcing)* provient du fait que l'on multiplie le mot reçu $Z_R$ par l'inverse de la matrice $\Lambda_R^F{}^1$.

Le principe général d'un décodage ZF-DFE après filtrage MMSE-GDFE et réduction de base est le suivant.

Le décodage ZF-DFE après réduction de base se déroule comme le décodage ZF jusqu'à l'*équation 3.* Une décomposition QR (ou orthogonalisation de Gram-Shmit) de la matrice $\Lambda_R^F{}^1$ est effectuée :

$$\Lambda_R^F{}' = U.T$$

avec U une matrice 8x8 réelle unitaire et T une matrice triangulaire supérieure 8x8 réelle (dont les termes sur la diagonale sont positifs). En multipliant $Z_R$ par $U^T$, on obtient :

$$Z_R{}' = U^T.Z_R = T.S_R{}' + W_R{}'$$

avec $E(W_R{}'W_R{}'^T) = \dfrac{N_0}{2}I_8$ car U est unitaire

Le mot décodé est défini par $\hat{S}_R = \Pi.\hat{S}_R{}'$ où $\hat{S}_R{}'$ est obtenu coordonnée par coordonnée de la manière suivante :

$$\hat{s}'_{R,8} = \left\lfloor \frac{z'_{R,8}}{t_{8,8}} + 0.5 \right\rfloor$$

Pour la coordonnée 7, on reporte la décision effectuée sur la coordonnée 8 :

$$\hat{s}'_{R,7} = \left\lfloor \frac{z'_{R,7} - t_{7,8}\hat{s}'_{R,8}}{t_{7,7}} + 0.5 \right\rfloor$$

et ainsi de suite jusqu'à :

$$\hat{s}'_{R,1} = \left\lfloor \frac{z'_{R,1} - \sum_{j=2}^{8} t_{1,j}\hat{s}'_{R,j}}{t_{1,1}} + 0.5 \right\rfloor$$

On va maintenant décrire l'algorithme de décodage par *« layers »* ou couches selon la présente invention, et en particulier son impact sur le principe général des algorithmes décrit ci-dessus.

Après filtrage MMSE-GDFE, on réalise une permutation de Z en réordonnant les lignes de Z. On définit alors le vecteur $\tilde{Z}$ de la manière suivante :

$$\tilde{Z} = \begin{bmatrix} z_{1,1} \\ z_{2,2} \\ z_{1,2} \\ z_{2,1} \end{bmatrix} \text{ avec la convention suivante } Z = \begin{bmatrix} z_{1,1} \\ z_{2,1} \\ z_{1,2} \\ z_{2,2} \end{bmatrix}$$

A partir de l'*équation* (2), il est aisé de montrer que :

$$\tilde{Z} = 2K_M\tilde{R}.\tilde{\Gamma}.S + \tilde{W}$$

avec

$$\widetilde{R} = \begin{bmatrix} r_{1,1}^1 & 0 & 0 & i.r_{1,2}^1 \\ 0 & r_{2,2}^2 & r_{2,1}^2 & 0 \\ 0 & r_{1,2}^2 & r_{1,1}^2 & 0 \\ r_{2,1}^1 & 0 & 0 & i.r_{2,2}^1 \end{bmatrix}$$

et

$$\widetilde{\Gamma} = \frac{1}{\sqrt{5}} \begin{bmatrix} \alpha & \alpha\theta & 0 & 0 \\ \overline{\alpha} & \overline{\alpha}\overline{\theta} & 0 & 0 \\ 0 & 0 & \alpha & \alpha\theta \\ 0 & 0 & \overline{\alpha} & \overline{\alpha}\overline{\theta} \end{bmatrix} = \frac{1}{\sqrt{5}} \begin{bmatrix} C_{\alpha,\theta} & 0_{2\times 2} \\ 0_{2\times 2} & C_{\alpha,\theta} \end{bmatrix}$$

On remarquera que la matrice $\widetilde{R}$ est une matrice en X. En outre, on a déplacé « i » de $\widetilde{\Gamma}$ vers $\widetilde{R}$.

Quelques définitions et propriétés:

*Définition 1* Matrice en X : une matrice sera dite en X si tous les coefficients en dehors de la diagonale et de l'antidiagonale sont nuls.

*Proposition 1 :*

Le produit de deux matrices en X est une matrice en X.

*Définition 2 :*

Soient $(X^j)_{1\leq j\leq 4}$ quatre éléments de l'anneau des entiers algébrique **Z[i, θ]** (où θ est un entier algébrique tel que **Q[1,θ]** soit une extension algébrique de degré 2 de **Q[i]**) et $\alpha$ un élément de **Z[i, θ]**, une matrice $\Delta_\alpha(X^1, X^2, X^3, X^4)$ sera dite en X algébrique si elle s'écrit :

$$\Delta_\alpha(x^1, x^2, x^3, x^4) = \begin{bmatrix} x^1 & 0 & 0 & \dfrac{\alpha}{\overline{\alpha}}x^4 \\ 0 & \overline{x}^1 & \dfrac{\overline{\alpha}}{\alpha}\overline{x}^4 & 0 \\ 0 & \dfrac{\alpha}{\overline{\alpha}}\overline{x}^2 & \overline{x}^3 & 0 \\ \dfrac{\overline{\alpha}}{\alpha}x^2 & 0 & 0 & x^3 \end{bmatrix}$$

où $\overline{x}$ est le conjugué algébrique de x.

*Proposition 2 :*

Soit $\Delta_\alpha(x^1, x^2, x^3, x^4)$ une matrice en X algébrique, le déterminant de $\Delta_\alpha(x^1, x^2, x^3, x^4)$ est donné par :

$$\det\left(\Delta_\alpha(x^1, x^2, x^3, x^4)\right) = N_{Q[i,\theta]/Q[i]}(x^1.x^3 - x^2.x^4)$$

où $N_{Q[i,\theta]/Q[i]}$ (x) = x.x̄ désigne la norme algébrique de x (pour x dans **Q [i, $\theta$])** par rapport à **Q[i]**. Le déterminant de $\Delta_\alpha$ ($x^1$, $x^2$, $x^3$, $x^4$) est un élément de **Z[i]** puisque c'est la norme de l'entier algébrique $x^1x^3$ - $x^2x^4$.

*Proposition 3 :*

Soit $\Delta_\alpha(x^1$, $x^2$, $x^3$, $x^4)$ une matrice en X algébrique, alors il existe une unique matrice $\Pi_\alpha(x^1$, $x^2$, $x^3$, $x^4)$ à coefficients dans **Z[i]** telle que :

$$\Delta_\alpha(x^1,x^2,x^3,x^4).\begin{bmatrix} C_{\alpha,\theta} & 0_{2x2} \\ 0_{2x2} & C_{\alpha,\theta} \end{bmatrix} = \begin{bmatrix} C_{\alpha,\theta} & 0_{2x2} \\ 0_{2x2} & C_{\alpha,\theta} \end{bmatrix}.\Pi_\alpha(x^1,x^2,x^3,x^4)$$

où $C_{\alpha,\theta} = \begin{bmatrix} \alpha & \alpha\theta \\ \bar{\alpha} & \bar{\alpha}.\bar{\theta} \end{bmatrix}$ est la matrice du plongement canonique de l'idéal $\alpha$**Z[i,$\theta$]** dans **Z[i]**

Dans le cas du *Golden Code,* la matrice $\Pi_\alpha(x^1$, $x^2$, $x^3$, $x^4)$ est donnée par :

$$\Pi_\alpha(x^1,x^2,x^3,x^4) = \begin{bmatrix} x_1^1 & x_2^1 & x_1^4 & x_1^4 - x_2^4 \\ x_2^1 & x_1^1 + x_2^1 & x_2^4 & -x_1^4 \\ x_1^2 + x_2^2 & x_1^2 + 2.x_2^2 & x_1^3 + x_2^3 & -x_2^3 \\ -x_2^2 & -x_1^2 - x_2^2 & -x_2^3 & x_1^3 \end{bmatrix}$$

où $\forall j\ 1 \leq j \leq 4$  $x^j = x_1^j + \theta.x_2^j$  ($x_1^j$ et $x_2^j \in$ **Z[i]**)

De plus, pour le *Golden Code,* la matrice $\dfrac{1}{\sqrt{5}}C_{\alpha,\theta}$ est unitaire.

*Proposition 4 :*

Soit $\Delta_\alpha(x^1$, $x^2$, $x^3$, $x^4)$ une matrice en X algébrique et $\Pi_\alpha(x^1$, $x^2$, $x^3$, $x^4)$ sa matrice associée, alors $\Pi_\alpha(x^1$, $x^2$, $x^3$, $x^4) \in$ **GL$_4$(Z[i])** si et seulement si :

$$\left| N_{Q[i,\theta]/Q[i]}(x^1.x^3 - x^2.x^4) \right| = 1.$$

Par ailleurs, on peut de la même manière définir des matrices en losange (coefficients nuls sur la diagonale et l'antidiagonale) susceptible d'obtenir de bons résultats.
Après permutation de Z, on réalise une réduction de base dite réduction algébrique de la manière suivante.
Soit $\Delta_\alpha(x^1$, $x^2$, $x^3$, $x^4)$ une matrice en X algébrique de déterminant de module 1 et $\Pi_\alpha(x^1$, $x^2$, $x^3$, $x^4)$ sa matrice associée. $\Pi_\alpha(x^1$, $x^2$, $x^3$, $x^4)$ est une matrice inversible et son inverse est à coefficients dans **Z[i].**
On a donc :

$$\tilde{Z} = 2.K_M\tilde{R}.\tilde{\Gamma}.S + \tilde{W} = 2K_M\tilde{R}.\Delta_\alpha(x^1,x^2,x^3,x^4).\tilde{\Gamma}.\Pi_\alpha^{-1}(x^1,x^2,x^3,x^4).S + \tilde{W}$$

$$\tilde{Z} = 2.K_M.\tilde{\Psi}.\tilde{\Gamma}.S'+\tilde{W}$$

En ayant posé : $\tilde{\Psi}=\tilde{R}.\Delta_\alpha(x^1, x^2, x^3, x^4)$ et $S'=\Pi_\alpha^{-1}(x^1,x^2,x^3,x^4).S$

La matrice $\tilde{\Psi}$ est une matrice en X en tant que produit de matrice en X. Ainsi on a effectué une réduction grâce à la matrice de passage $\Pi_\alpha(x^1, x^2, x^3, x^4)$ qui a transformé la matrice de canal initiale $\tilde{R}$ en une matrice de canal équivalente $\tilde{\Psi}$.

Le but de la réduction algébrique est donc de trouver une matrice $\Delta_\alpha(x^1, x^2, x^3, x^4$ de telle sorte que la matrice $\tilde{\Psi}$ ait de meilleures propriétés pour permettre l'utilisation de technique de décodage simple, tout en obtenant de bonnes performances. Pour ce faire, on définit deux critères : un équilibre au sein de chaque layer et une maximisation de la puissance du second layer. Ces critères seront décrits plus en détails par la suite.

Les propriétés recherchées de $\tilde{\Psi}$ dépendent donc de l'algorithme de décodage employé.

On va maintenant décrire le décodage par *layer* à plusieurs candidats: mise en oeuvre des algorithmes ZF-DFE.

Le principe du décodage à p candidats est le suivant.

L'algorithme de décodage consiste à déterminer p candidats possibles pour le *layer* 2. Pour chacun des p candidats du *layer* 2, on détermine la plus proche valeur du *layer* 1 en reportant la décision faite sur le *layer* 2 (comme pour la méthode DFE). Au sein de chacun des layers, la technique de décodage est le ZF rendu quasi optimal par la réduction algébrique (étape 2 de la réduction). Le nombre de candidats, p, est un nombre relativement faible : p=2 présente par exemple un excellent compromis entre complexité et performances. Dans l'optique d'un système temps réel facile à implémenter, il est préférable de fixer la valeur de p. Cependant, des stratégies plus complexes de détermination de p en fonction de la matrice $\tilde{\Psi}$ pourraient être envisagées.

- La décomposition QR

Supposons que la réduction ait déjà été effectuée, on a :

$$\tilde{Z} = 2K_M.\tilde{\Psi}.\tilde{\Gamma}.S'+\tilde{W}$$

Une décomposition QR de la matrice $\tilde{\Psi}$ est effectuée :

$$\tilde{\Psi} = \begin{bmatrix} \psi_{1,1}^1 & 0 & 0 & i.\psi_{1,2}^1 \\ 0 & \psi_{2,2}^2 & \psi_{2,1}^2 & 0 \\ 0 & \psi_{1,2}^2 & \psi_{1,1}^2 & 0 \\ \psi_{2,1}^1 & 0 & 0 & i.\psi_{2,2}^1 \end{bmatrix} = U.T$$

avec U matrice complexe 4x4 unitaire ($U^H U =I_4$) et T matrice complexe 4x4 triangulaire supérieure dont les termes diagonaux sont réels positifs. De plus, U et T possèdent une structure particulière :

$$U = \begin{bmatrix} u_{1,1} & 0 & 0 & u_{1,4} \\ 0 & u_{2,2} & u_{2,3} & 0 \\ 0 & u_{3,2} & u_{3,3} & 0 \\ u_{4,1} & 0 & 0 & u_{4,4} \end{bmatrix} \text{ et } T = \begin{bmatrix} t_{1,1} & 0 & 0 & t_{1,4} \\ 0 & t_{2,2} & t_{2,3} & 0 \\ 0 & 0 & t_{3,3} & 0 \\ 0 & 0 & 0 & t_{4,4} \end{bmatrix}$$

Etant donné la forme de $\tilde{\Psi}$, sa décomposition QR est équivalente à la décomposition QR de 2 matrices 2x2 :

$$\begin{bmatrix} \psi_{1,1}^1 & i.\psi_{1,2}^1 \\ \psi_{2,1}^1 & i.\psi_{2,2}^1 \end{bmatrix} = \begin{bmatrix} u_{1,1} & u_{1,4} \\ u_{4,1} & u_{4,4} \end{bmatrix} . \begin{bmatrix} t_{1,1} & t_{1,4} \\ 0 & t_{4,4} \end{bmatrix}$$

$$\begin{bmatrix} \psi_{2,2}^2 & \psi_{2,1}^2 \\ \psi_{1,2}^2 & \psi_{1,1}^2 \end{bmatrix} = \begin{bmatrix} u_{2,2} & u_{2,3} \\ u_{3,2} & u_{3,3} \end{bmatrix} . \begin{bmatrix} t_{2,2} & t_{2,3} \\ 0 & t_{3,3} \end{bmatrix}$$

On obtient alors :

$$\tilde{Z} = 2K_M.U.T.\tilde{\Gamma}.S' + \tilde{W}$$

En multipliant par $U^H$, on obtient :

$$\tilde{Z}' = U^H.\tilde{Z} = 2K_M T.\tilde{\Gamma}.S' + \tilde{W}'$$

avec $E(\tilde{W}' \ \tilde{W}'^H) = N_0.I_4$ puisque U est unitaire.

- L'extraction de p candidats par ZF pour le second *layer*

Les deux dernières composantes de $\tilde{Z}'$ sont :

$$\begin{bmatrix} \tilde{z}'_3 \\ \tilde{z}'_4 \end{bmatrix} = 2.K_M . \begin{bmatrix} t_{3,3} & 0 \\ 0 & t_{4,4} \end{bmatrix} . \frac{1}{\sqrt{5}} C_{\alpha,\theta} . \begin{bmatrix} s'_3 \\ s'_4 \end{bmatrix} + \begin{bmatrix} \tilde{w}'_3 \\ \tilde{w}'_4 \end{bmatrix}$$

En appliquant un ZF (en multipliant par la matrice inverse), on obtient :

$$\tilde{S}'_2 = \frac{1}{2.K_M\sqrt{5}} . C_{\alpha,\theta}^H . \begin{bmatrix} 1/t_{3,3} & 0 \\ 0 & 1/t_{4,4} \end{bmatrix} \begin{bmatrix} \tilde{z}'_3 \\ \tilde{z}'_4 \end{bmatrix}$$

D'où :

$$\tilde{S}'_2 = \begin{bmatrix} s'_3 \\ s'_4 \end{bmatrix} + \frac{1}{2.K_M\sqrt{5}} . C_{\alpha,\theta}^H . \begin{bmatrix} 1/t_{3,3} & 0 \\ 0 & 1/t_{4,4} \end{bmatrix} . \begin{bmatrix} \tilde{w}'_3 \\ \tilde{w}'_4 \end{bmatrix}$$

A partir du vecteur $\tilde{S}'_2$, on établit une liste des p vecteurs de $Z[i]^2$ distincts deux à deux $\{\hat{S}'^1_2 ,....., \hat{S}'^p_2\}$ les plus proches de $\tilde{S}'_2$.

- Le décodage ZF du premier *layer* après report des p candidats

Pour chacun des p vecteurs $\hat{S}'^{j}_{2}$ ($1 \leq j \leq p$), on calcule un vecteur $\hat{S}'^{j}_{1}$ en arrondissant chacune des coordonnées du $\tilde{S}'^{j}_{1}$ défini comme suit :

$$\tilde{S}'^{j}_{1} = \frac{1}{2.K_{M}\sqrt{5}}.C_{\alpha,\theta}^{H}.\begin{bmatrix} 1/t_{1,1} & 0 \\ 0 & 1/t_{2,2} \end{bmatrix}.\left( \begin{bmatrix} \tilde{z}'_{1} \\ \tilde{z}'_{2} \end{bmatrix} - 2.K_{M}.\begin{bmatrix} 0 & t_{1,4} \\ t_{2,3} & 0 \end{bmatrix}.\frac{1}{\sqrt{5}}C_{\alpha,\theta}.\hat{S}'^{j}_{2} \right)$$

On construit le vecteur $\hat{S}'^{j}$ :

$$\hat{S}'^{j} = \begin{bmatrix} \hat{S}'^{j}_{1} \\ \hat{S}'^{j}_{2} \end{bmatrix}$$

Le vecteur $\hat{S}'^{j}$ est ramené dans la base initiale, pour obtenir $\hat{S}^{j}$ :

$$\hat{S}^{j} = \prod_{\alpha}(x^{1}, x^{2}, x^{3}, x^{4}).\hat{S}'^{j}$$

Ainsi, on établit une liste de p vecteurs de **Z[i]⁴** distincts deux à deux $\{\hat{S}^{1},.....,\hat{S}^{p}\}$ candidats pour être le vecteur décodé $\hat{S}$.

- détermination du meilleur candidat.

Pour chacun des vecteurs $\hat{S}^{j}$, son appartenance à la région de shaping est testée. Ainsi, on construit une sous liste de la liste précédente en ne gardant que les vecteurs vérifiant la condition de *shaping.* On notera cette liste de k vecteurs (avec $0 \leq k \leq p$) : $\{\hat{S}^{\sigma(1)},.....,\hat{S}^{\sigma(k)}\}$. Il faut distinguer 2 cas :

- k = 0. Plusieurs stratégies peuvent être adoptées sans graves conséquences sur les performances. Par exemple, on peut choisir de saturer les coordonnées de $\hat{S}^{1}$ qui ne vérifient pas la condition de shaping, de manière à obtenir le vecteur décodé $\hat{S}$.
- k ≥ 1. Dans ce cas, le vecteur décodé $\hat{S}$ est défini comme suit :

$$\hat{S} = Arg\left( \underset{1 \leq j \leq k}{Min} \left\| \tilde{Z} - 2.K_{M}\tilde{R}.\tilde{\Gamma}.\hat{S}^{\sigma(j)} \right\|^{2} \right)$$

On va reprendre ci-dessous les critères pour $\tilde{\Psi}$ lors de l'algorithme de réduction.

- équilibre au sein de chaque layer.

Pour chacun des layers, on utilise un décodage ZF. Pour le layer j ($1 \leq j \leq 2$), la matrice 2x2 $A_{j}$ à inverser se présente comme suit :

$$A_j = 2.K_M \cdot \begin{bmatrix} t_{2.j-1,2.j-1} & 0 \\ 0 & t_{2.j,2.j} \end{bmatrix} \cdot \frac{1}{\sqrt{5}} C_{\alpha,\theta}$$

Etant donné que la matrice $\frac{1}{\sqrt{5}} C_{\alpha,\theta}$ est unitaire, si $t_{2.j-1,\ 2.j-1}$ et $t_{2.j,\ 2.j}$ sont égaux alors la matrice $A_j$ est proportionnelle à une matrice unitaire, ce qui rendrait le décodage ZF équivalent au Maximum de Vraisemblance au sein de chacun des layers. Le but de la réduction au sein du layer j est donc d'égaliser le plus possible les coefficients $t_{2.j-1,\ 2.j-1}$ et $t_{2.j,\ 2.j}$.

- maximiser la puissance du layer 2.

Pour que le décodeur proposé ait le même comportement que le décodeur au Maximum de Vraisemblance, il est nécessaire que, parmi les p points choisis lors du décodage du second layer, l'un d'eux corresponde à celui que le décodeur au Maximum de Vraisemblance aurait décodé. Pour ce faire, il faut maximiser le produit $t_{3,3}.t_{4,4}$.

Etant donné que la réduction ne modifie pas le module du déterminant de T (c'est-à-dire le produit $t_{1,1}.t_{2,2}.t_{3,3}.t_{4,4}$), maximiser le produit $t_{3,3}.t_{4,4}$ est équivalent à minimiser le produit $t_{1,1}.t_{2,2}$.

Il est important de noter que :

$$t_{1,1} = \left\| \tilde{\Psi}_1 \right\| = \sqrt{\sum_{i=1}^{4} \left| \tilde{\Psi}_{i,1} \right|^2} \quad \text{et} \quad t_{2,2} = \left\| \tilde{\Psi}_2 \right\| = \sqrt{\sum_{i=1}^{4} \left| \tilde{\Psi}_{i,2} \right|^2}$$

On va maintenant décrire un exemple d'algorithme de réduction prenant en compte les deux critères d'équilibre et de maximisation.

Principe de l'algorithme de réduction :

L'algorithme de réduction algébrique s'effectue en deux étapes :

- La première étape consiste à déterminer un premier quadruplet $(\beta^1, (\beta^2, \beta^3, \beta^4)$ d'entiers algébriques qui permettra la minimisation du produit $\|\tilde{\Phi}_1\|.\|\tilde{\Phi}_2\|$ où la matrice $\tilde{\Phi}$ est donnée par :

$$\tilde{\Phi} = \tilde{R}.\Delta_\alpha(\beta^1, \beta^2, \beta^3, \beta^4)$$

- La deuxième étape consiste à équilibrer chacun des layers une fois la première étape effectuée. Cette étape ne modifiera pas l'équilibre entre les layers, c'est à dire que l'on aura :

$$\left\| \tilde{\Phi}_1 \right\| . \left\| \tilde{\Phi}_2 \right\| = \left\| \tilde{\Psi}_1 \right\| . \left\| \tilde{\Psi}_2 \right\|$$

Préliminaires mathématiques :

Si l'on a : $\tilde{\Phi} = \tilde{R}.\Delta_\alpha(\beta^1, \beta^2, \beta^3, \beta^4)$

On remarque que pour une matrice $\tilde{R}$ donnée:

- $\|\hat{\Phi}_1\|$ ne dépend que de $(\beta^1, \beta^2)$ que l'on notera $\|\hat{\Phi}_1\|(\beta_1, \beta_2)$:

$$\left\|\widetilde{\Phi}_1\right\|(\beta^1,\beta^2)=\sqrt{\left|r^1_{1,1}.\beta^1+i.r^1_{1,2}\frac{\overline{\alpha}}{\alpha}\beta^2\right|^2+\left|r^1_{2,1}.\beta^1+i.r^1_{2,2}\frac{\overline{\alpha}}{\alpha}\beta^2\right|^2}$$

- $\|\hat{\widetilde{\Phi}}_2\|$ ne dépend que de $(\overline{\beta}^1,\overline{\beta}^2)$ :

$$\left\|\widetilde{\Phi}_2\right\|(\overline{\beta}^1,\overline{\beta}^2)=\sqrt{\left|r^2_{2,2}.\overline{\beta}^1+r^2_{2,1}\frac{\alpha}{\overline{\alpha}}\overline{\beta}^2\right|^2+\left|r^2_{1,2}.\overline{\beta}^1+r^2_{1,1}\frac{\alpha}{\overline{\alpha}}\overline{\beta}^2\right|^2}$$

*Définition :*

Une unité d'un corps de nombre **Q[i,θ]** est un élément de **Z[i,θ]** dont l'inverse est également dans **Z[i,θ]**. Toute unité de **Q[i,θ]** a une norme algébrique par rapport à **Q[i]** qui appartient à {1,-1, i, -i}.

*Théorème de Dirichlet dans un corps quadratique réel:*

Soit Q[θ] une extension algébrique totalement réelle de degré 2 de **Q.** Alors il existe une unité, appelée unité fondamentale $\mu$, telle que, toute unité u de **Q[θ]** peut s'écrire: u = $(\pm1).\mu^k$ avec k $\in$ Z

*Remarque :*

Dans le cas du Golden Code, on peut prendre $\mu = \theta$

*Proposition 5 :*

Si le couple $(\beta^1, \beta^2)$ d'entiers algébriques de **Z[i,θ]** minimise le produit $\|\widetilde{\Phi}_1\|.\|\widetilde{\Phi}_2\|$, alors $\beta_1$ et $\beta_2$ n'ont pas de multiples communs autres que les unités de **Z[i,θ].**

*Preuve:*

Supposons que $(\beta^1, \beta^2)$ minimise $\|\widetilde{\Phi}_1\|.\|\widetilde{\Phi}_2\|$ et qu'il existe x $\in$ Z[i,θ] tel que $\beta^1 = x.\gamma^1$ et $\beta^2 = x.\gamma^2$. Alors

$$\left\|\widetilde{\Phi}_1\right\|(\beta^1,\beta^2).\left\|\widetilde{\Phi}_2\right\|(\overline{\beta}^1,\overline{\beta}^2)=\left|N_{Q[i,\theta]/Q[i]}(x)\right|\left\|\widetilde{\Phi}_1\right\|(\gamma^1,\gamma^2).\left\|\widetilde{\Phi}_2\right\|(\overline{\gamma}^1,\overline{\gamma}^2)$$

d'où $|N_{Q[i,\theta]/Q[i]}(x)|$.
Donc x est une unité de **Z[i,θ].**

*Proposition 6 :*

Si l'anneau des entiers algébriques **Z[i,θ]** est un PID *(Principal Integral Domain),* ce qui est le cas pour le *Golden Code,* et si de plus $\beta^1$ et $\beta^2$ sont deux entiers algébriques de **Z[i,θ],** qui n'ont aucun multiples communs autres que les unités de **Z[i,θ],** alors il existe deux entiers algébriques $\beta^3$ et $\beta^4$ tels que :

$$\beta^1.\beta^3-\beta^2.\beta^4=1$$

*Preuve :*

A partir de la proposition 5, on utilise une généralisation du théorème de Bézout dans un PID, voir notamment le document: H. Cohen, « A Course in Computational Algebraic Number Theory », Springer, 1996.

*Proposition 7 :*

Si le couple $(\beta_1, \beta_2)$ d'entiers algébriques de **Z[i,θ]** minimise le produit $\|\widetilde{\Phi}_1\|.\|\widetilde{\Phi}_2\|$ et si de plus **Z[i,θ]** est un PID, alors il existe deux entiers algébriques $\beta^3$ et $\beta^4$ de **Z[i,θ]** (que l'on détermine en résolvant $\beta^1.\beta^3-\beta^2.\beta^4 =1$) tels que $\Pi_\alpha$ $(\beta^1, \beta^2, \beta^3, \beta^4) \in$ **GL$_4$(Z[i])**

*Proposition 8 :*

Soit $\mu$ une unité fondamentale de **Z[i,θ]** avec $|\mu| > 1$. Soit $(\gamma^1, \gamma^2) \in$ **Z[i,θ]**², alors il existe $(\beta^3, \beta^2) \in$ **Z[i,θ]**² tel que:

$$\left\|\widetilde{\Phi}_1\right\|(\beta^1,\beta^2).\left\|\widetilde{\Phi}_2\right\|(\overline{\beta}^1,\overline{\beta}^2) = \left\|\widetilde{\Phi}_1\right\|(\gamma^1,\gamma^2).\left\|\widetilde{\Phi}_2\right\|(\overline{\gamma}^1,\overline{\gamma}^2)$$

et

$$\left\|\widetilde{\Phi}_1\right\|^2(\beta^1,\beta^2)+\left\|\widetilde{\Phi}_2\right\|^2(\overline{\beta}^1,\overline{\beta}^2) \le \left\|\widetilde{\Phi}_1\right\|(\beta^1,\beta^2).\left\|\widetilde{\Phi}_2\right\|(\overline{\beta}^1,\overline{\beta}^2).\left(|\mu|+\frac{1}{|\mu|}\right)$$

*Preuve :*

$$\text{Soit } k = \left\lfloor \frac{\ln\left(\left\|\widetilde{\Phi}_1\right\|(\gamma^1,\gamma^2)\right)-\ln\left(\left\|\widetilde{\Phi}_2\right\|(\overline{\gamma}^1,\overline{\gamma}^2)\right)}{\ln\left(|\mu|^2\right)}+0.5 \right\rfloor.$$

On prend :

$$\beta^1 = \mu^{-k}\gamma^1 \text{ et } \beta^2 = \mu^{-k}\gamma^2$$

Alors on a $\|\widetilde{\Phi}_1\|(\beta^1,\beta^2).\|\widetilde{\Phi}_2\|(\overline{\beta}_1,\overline{\beta}_2)=\|\widetilde{\Phi}_1\|(\gamma^1, \gamma^2).\|\widetilde{\Phi}_2\|(\overline{\gamma}^1,\overline{\gamma}^2)$
On obtient alors facilement :

$$\left\|\widetilde{\Phi}_1\right\|^2(\beta^1,\beta^2)+\left\|\widetilde{\Phi}_2\right\|^2(\overline{\beta}^1,\overline{\beta}^2) \le \left\|\widetilde{\Phi}_1\right\|(\beta^1,\beta^2).\left\|\widetilde{\Phi}_2\right\|(\overline{\beta}^1,\overline{\beta}^2).\left(|\mu|+\frac{1}{|\mu|}\right)$$

Première-étape : équilibre entre les layers :

- Recherche de $(\beta^1, \beta^2) \in$ **Z[i,θ]**²

Tout d'abord, on recherche le couple $(\beta^1, \beta^2) \in$ **Z[i,θ]**² qui minimise $\|\widetilde{\Phi}_1\|.\|\widetilde{\Phi}_2\|$.
La détermination de $(\beta^1, \beta^2) \in$ **Z[i,θ]**² est équivalente à la détermination du vecteur B de **Z[i]⁴** défini par :

$$B = . \begin{bmatrix} \beta_1^1 \\ \beta_2^1 \\ \beta_1^2 \\ \beta_2^2 \end{bmatrix} \text{où} \quad \beta^j = \beta_j^1 + \theta.\beta_j^2$$

En posant :

$$\Omega = \begin{bmatrix} \omega_1 \\ \omega_2 \\ \omega_3 \\ \omega_4 \end{bmatrix} = \begin{bmatrix} r_{1,1}^1 & 0 & i.r_{1,2}^1 & 0 \\ r_{2,1}^1 & 0 & i.r_{2,2}^1 & 0 \\ 0 & r_{2,2}^2 & 0 & r_{2,1}^2 \\ 0 & r_{1,2}^2 & 0 & r_{1,1}^2 \end{bmatrix} \cdot \underbrace{\begin{bmatrix} 1 & \overline{\theta} & 0 & 0 \\ 1 & \overline{\theta} & 0 & 0 \\ 0 & 0 & \dfrac{\overline{\alpha}}{\alpha} & \dfrac{\overline{\alpha}}{\alpha}\theta \\ 0 & 0 & \dfrac{\alpha}{\overline{\alpha}} & \dfrac{\alpha}{\overline{\alpha}}\overline{\theta} \end{bmatrix}}_{G_{\alpha,\theta}(R)} \cdot \begin{bmatrix} \beta_1^1 \\ \beta_2^1 \\ \beta_1^2 \\ \beta_2^2 \end{bmatrix} = G_{\alpha,\theta}(R).B$$

Ainsi on a :

$$\left\| \widetilde{\Phi}_1 \right\|^2 = \left| \omega_1 \right|^2 + \left| \omega_2 \right|^2$$

$$\left\| \widetilde{\Phi}_2 \right\|^2 = \left| \omega_3 \right|^2 + \left| \omega_4 \right|^2$$

L'algorithme de recherche se déroule comme suit :

*Initialisation :*

Recherche du vecteur le plus court du lattice généré par les colonnes de $G_{\alpha,\theta}(R)$. $B_{min}$ est initialisé par les coordonnées d'un des vecteurs les plus courts de ce lattice :

$$B_{min} \leftarrow Arg\left( \underset{\substack{B \in Z[i]^4 \\ B \neq 0}}{Min} \left\| G_{\alpha,\theta}(R).B \right\|^2 \right)$$

On calcule la valeur de $\left\| \widetilde{\Phi}_1 \right\|.\left\| \widetilde{\Phi}_2 \right\|$ pour $B_{min}$ cette valeur est notée $\rho$.

*Recherche dans une liste :*

On établit la liste, notée L, des vecteurs du lattice généré par les colonnes de $G_{\alpha,\theta}(R)$ qui ont une norme au carré inférieure ou égale à $\quad \rho.\left( \left| \mu \right| + \dfrac{1}{\left| \mu \right|} \right) \quad$ c'est-à-dire:

**19**

$$L = \left\{ B \in \mathbf{Z[i]}^4 \; B \neq 0 \text{ tel que } \left\| G_{\alpha,\theta}(R).B \right\|^2 \leq \rho\left( |\mu| + \frac{1}{|\mu|} \right) \right\}$$

.

Pour chacun des éléments de la liste on calcule la valeur de $\|\tilde{\Phi}_1\|.\|\tilde{\Phi}_2\|$, $B_{min}$ est l'élément de cette liste qui minimise $\|\tilde{\Phi}_1\|.\|\tilde{\Phi}_2\|$.

Grâce à la *Proposition 8,* il est évident que le couple $(\beta^1, \beta^2) \in Z[i,\theta]^2$ obtenu grâce à $B_{min}$ minimise le produit $\|\tilde{\Phi}_1\|.\|\tilde{\Phi}_2\|$.

- détermination de $(\beta^3, \beta^4) \in \mathbf{Z[i,\theta]^2}$ :

Après avoir déterminer, le couple $(\beta^1, \beta^2) \in \mathbf{Z[i,\theta]^2}$ qui minimise le produit $\|\tilde{\Phi}_1\|.\|\tilde{\Phi}_2\|$, il suffit de résoudre l'équation $\beta^1.\beta^3 - \beta^2.\beta^4 = 1$, qui a une solution d'après la *Proposition 7,* pour déterminer le couple $(\beta^3, \beta^4) \in \mathbf{Z[i,\theta]^2}$. Une telle équation se ramène à un système de 4 équations à 8 inconnus à coefficients dans $\mathbf{Z}$, dont on cherche des solutions dans $\mathbf{Z}^8$. Ce type de système se résout aisément grâce la mise sous forme HNF d'une matrice rectangulaire à coefficients entiers (cf. H Cohen).

- Deuxième étape: équilibre au sein des *layers:*

A l'issue de la première étape, on a :

$$\tilde{\Phi} = \tilde{R}.\Delta_\alpha(\beta^1, \beta^2, \beta^3, \beta^4)$$

Une décomposition QR de $\tilde{\Phi}$ est effectuée :

$$\tilde{\Phi} = U.T$$

Pour chaque layer j $(1 \leq j \leq 2)$, on définit :

$$k_j = \left\lfloor \frac{\ln(t_{2.j,2.j}) - \ln(t_{2.j+1,2.j+1})}{\ln(|\mu|^2)} + 0.5 \right\rfloor$$

Dans cette seconde étape, on utilisera la matrice de réduction

$$\Delta_\alpha(\mu^{-k_1}, 0, \mu^{-k_2}, 0)$$

On notera que sa matrice associée $\Pi_\alpha(\mu^{-k1}, 0, \mu^{-k2}, 0)$ est bien dans $\mathbf{GL_4(Z[i])}$ grâce à la *Proposition* 4 et au fait que le $\mu^{-k1-k2}$ est une unité et donc $|N_{Q[i,\theta]/Q[i]}(\mu^{-k1-k2})|=1$

- Conclusion de l'algorithme de réduction

En conclusion, on définit :

$$\tilde{\Psi} = \tilde{R}.\Delta_\alpha(\beta^1, \beta^2, \beta^3, \beta^4).\Delta_\alpha(\mu^{-k_1}, 0, \mu^{-k_2}, 0) = \tilde{R}\Delta_\alpha(x^1, x^2, x^3, x^4)$$

avec $x^1 = \beta^1.\mu^{-k1}$, $x^2 = \beta^2.\mu^{-k1}$, $x^3 = \beta^3.\mu^{-k2}$ et $x^4 = \beta 4.\mu^{-k2}$

La courbe sur l'unique figure présente les performances du décodeur proposé pour deux valeurs de p (p=1 et p=2) comparées à celles du décodeur au Maximum de Vraisemblance et à celles du décodeur MMSE-GDFE LLL ZF-DFE. Les performances sont exprimées en PER *(Packet Error Rate)* en fonction du Rapport Signal à Bruit (SNR)en dB.

Bien sûr, l'invention n'est pas limitée aux exemples qui viennent d'être décrits et de nombreux aménagements peuvent être apportés à ces exemples sans sortir du cadre de l'invention. On peut envisager l'utilisation de matrices en losange à la place des matrices en X pour la réduction de base et pour le décodage. Par ailleurs, on peut aussi ne pas réaliser la première étape de l'algorithme de réduction algébrique ou de la modifier pour la rendre plus facile à réaliser. Cependant, pour compenser cette baisse de qualité de la réduction, il sera nécessaire de prendre une valeur de p assez élevée.

**Revendications**

1. Procédé de décodage d'un vecteur Y de codes spatio-temporels 2x2 de type Golden Code, ledit procédé comprenant les étapes suivantes:

   - on réalise un filtrage de type MMSE-GDFE de façon à obtenir un vecteur $Y^F$=RX + W , avec $Y^F$ le vecteur Y filtré au moyen d'une matrice de filtre F nommé « forward filter », R une matrice conventionnelle nommée « backward filter », X le vecteur émis et W la matrice bruit complexe,
   - on réalise un recentrage de constellation de sorte que le vecteur à déterminer devient Z tel que Z=$Y^F$-$2K_M R\Gamma S_0$=$2K_M R\Gamma S$+W, $K_M$ étant la constante de normalisation de la constellation considérée, r étant le Golden Code, et S le vecteur des symboles d'information,
   - on réalise une étape de permutation des éléments des matrices Z, R et r de façon à obtenir $\tilde{Z}$, $\tilde{R}$ et $\tilde{\Gamma}$ tels que $\tilde{R}^H R$ est une matrice en forme de X, et on déplace le nombre complexe i de $\Gamma$ vers R, et

   - on réalise une étape de réduction de base de lattice telle que $\tilde{Z}$ = $2K_M \Psi\Gamma S'$ + $W$ avec $\tilde{\Psi}$ =$\tilde{R}.\Delta_\alpha(x^1, x^2, x^3, x^3, x^4)$ et $S'=\Pi_\alpha^{-1}(x^1,x^2,x^3,x^4).S$, $\Pi_\alpha(x^1, x^2, x^3, x^4)$ étant une matrice de changement de base, $\Pi_\alpha(x^1, x^2, x^3, x^4)$ est la matrice associée à $\Delta_\alpha(x^1, x^2, x^3, x^4)$ qui est une matrice dont le module de déterminant est égale à 1 et définie telle que $\Delta_\alpha^H \Delta_\alpha$ est une matrice en forme de X,
   - on applique l'algorithme de décodage ZF-DFE dans lequel on identifie parmi les quatre éléments de $\tilde{z}$, deux couches aussi nommées « layers », chaque couche comprenant les deux éléments de la diagonale ou l'anti-diagonale de $\tilde{Z}$; on applique l'algorithme DFE couche par couche, et on applique l'algorithme ZF au sein de chacune des couches.

2. Procédé selon la revendication 1, **caractérisé en ce que** la permutation de $\tilde{Z}$ est la suivante :

$$\tilde{Z} = \begin{bmatrix} z_{1,1} \\ z_{2,2} \\ z_{1,2} \\ z_{2,1} \end{bmatrix} \text{ avec la convention suivante } Z = \begin{bmatrix} z_{1,1} \\ z_{2,1} \\ z_{1,2} \\ z_{2,2} \end{bmatrix}.$$

3. Procédé selon la revendication 2, **caractérisé en ce que** $\tilde{R}$ est une matrice en forme de X telle que :

$$\widetilde{R} = \begin{bmatrix} r_{1,1}^1 & 0 & 0 & i.r_{1,2}^1 \\ 0 & r_{2,2}^2 & r_{2,1}^2 & 0 \\ 0 & r_{1,2}^2 & r_{1,1}^2 & 0 \\ r_{2,1}^1 & 0 & 0 & i.r_{2,2}^1 \end{bmatrix} \text{ et } \widetilde{\Gamma} = \frac{1}{\sqrt{5}} \begin{bmatrix} \alpha & \alpha\theta & 0 & 0 \\ \overline{\alpha} & \overline{\alpha}\overline{\theta} & 0 & 0 \\ 0 & 0 & \alpha & \alpha\theta \\ 0 & 0 & \overline{\alpha} & \overline{\alpha}\overline{\theta} \end{bmatrix},$$

$\alpha$ et $\theta$ étant des

coefficients de Golden Code tels que : $\quad \theta = \dfrac{1+\sqrt{5}}{2}$ , $\quad \overline{\theta} = \dfrac{1-\sqrt{5}}{2}$ , $\quad \alpha = 1 + i - i.\theta, \overline{\alpha}=1+i-i.\overline{\theta}$

**4.** Procédé selon l'une quelconque des revendications précédentes, **caractérisé en ce que** :

$$\Delta_\alpha(x^1,x^2,x^3,x^4) = \begin{bmatrix} x^1 & 0 & 0 & \dfrac{\alpha}{\overline{\alpha}}x^4 \\ 0 & \overline{x}^1 & \dfrac{\overline{\alpha}}{\alpha}\overline{x}^4 & 0 \\ 0 & \dfrac{\alpha}{\overline{\alpha}}\overline{x}^2 & \overline{x}^3 & 0 \\ \dfrac{\overline{\alpha}}{\alpha}x^2 & 0 & 0 & x^3 \end{bmatrix}$$

et

$$\Pi_\alpha(x^1,x^2,x^3,x^4) = \begin{bmatrix} x_1^1 & x_2^1 & x_1^4 & x_1^4 - x_2^4 \\ x_2^1 & x_1^1 + x_2^1 & x_2^4 & -x_1^4 \\ x_1^2 + x_2^2 & x_1^2 + 2.x_2^2 & x_1^3 + x_2^3 & -x_2^3 \\ -x_2^2 & -x_1^2 - x_2^2 & -x_2^3 & x_1^3 \end{bmatrix}$$

où $\forall j \; 1 \le j \le 4 \quad x^j = x_1^j + \theta.x_2^j \; (x_1^j \text{ et } x_2^j \in \mathbf{Z[i]})$ .

**5.** Procédé selon l'une quelconque des revendications 1 à 4, **caractérisé en ce qu'**on détermine $\Delta_\alpha$ de façon à ce que, lors d'une décomposition QR, les deux éléments d'une même couche soient sensiblement de même valeur.

**6.** Procédé selon l'une quelconque des revendications 1 à 5, **caractérisé en ce que** $\widetilde{Z}$ est définie en deux couches, une première couche composée des éléments sur la diagonale et une seconde couche composée des éléments sur l'anti-diagonale, et **en ce qu'**on détermine $\Delta_\alpha$ de façon à ce que, lors d'une décomposition QR, le produit des deux éléments de la seconde couche soit supérieur au produit des deux éléments de la première couche.

**7.** Procédé selon l'une quelconque des revendications précédentes, **caractérisé en ce que** $\widetilde{Z}$ est définie en deux couches, une première couche composée des éléments sur la diagonale et une seconde couche composée des éléments sur l'anti-diagonale, et **en ce que** lors de l'application de l'algorithme ZF pour la seconde couche, on extrait p candidats possibles, ensuite pour la première couche on extrait également p candidats possibles, puis on détermine le meilleur candidat vecteur.

**8.** Procédé selon la revendication 7, **caractérisé en ce que** p est égal à 2.

**9.** Procédé selon la revendication 1, **caractérisé en ce que** $\tilde{R}$ et $\Delta_\alpha$ sont des matrices en X.

**10.** Procédé selon la revendication 1, **caractérisé en ce que** $\tilde{R}$ et $\Delta_\alpha$ sont des matrices en losange.

**Claims**

**1.** Method for decoding 2x2 space-time codes of a vector Y of the Golden Code type, the said method comprises the following steps:

- a filtering of the MMSE-GDFE type is carried out in order to obtain a vector $Y^F = RX + W$ , with $Y^F$ the vector Y filtered by means of a filter matrix F named "forward filter", R a conventional matrix named "backward filter", X the vector transmitted and W the complex noise matrix,
- a constellation recentring is carried out so that the vector to be determined becomes Z, such that $Z=Y^F-2K_M R\Gamma S_0=2K_M R\Gamma S+W$, $K_M$ being the normalization constant for the constellation in question, r being the Golden Code, and S the vector of the information symbols,
- a step of permutation of the elements of the matrices Z, R and r is carried out in order to obtain $\tilde{Z}$, $\tilde{R}$ and $\tilde{\Gamma}$ such that $\tilde{R}^H R$ is a matrix in the form of an X and the complex number i is moved from r to R, and

- a step of lattice basis reduction is carried out such that $\tilde{Z}= 2K_M\tilde{\Psi}\tilde{\Gamma}S+W$ with $\tilde{\psi} = \tilde{R}.\Delta_\alpha(\mathbf{x}^1, \mathbf{x}^2, \mathbf{x}^3, \mathbf{x}^4)$ and

$$\mathbf{S'} = \Pi_\alpha^{-1}(\mathbf{x}^1, \mathbf{x}^2, \mathbf{x}^3, \mathbf{x}^4).\mathbf{S}, \quad \Pi_\alpha(\mathbf{x}^1, \mathbf{x}^2, \mathbf{x}^3, \mathbf{x}^4)$$ being a basis change matrix, $\Pi_\alpha(\mathbf{x}^1, \mathbf{x}^2, \mathbf{x}^3, \mathbf{x}^4)$ is the

matrix associated with $\Delta_\alpha(x^1, x^2, x^3, x^4)$ which is a matrix in which the determinant module is equal to 1 and defined such that $\Delta_\alpha^H\Delta_\alpha$ is a matrix in the form of an X,
- the ZF-DFE decoding algorithm is applied, in which among the four elements of $\tilde{Z}$ two layers are identified, each layer comprising the two elements of the diagonal or anti-diagonal of $\tilde{Z}$ ; the DFE algorithm is applied layer by layer and the ZF algorithm within each of the layers.

**2.** Method according to claim 1, **characterized in that** the permutation of $\tilde{Z}$ is as follows:

$$\tilde{Z} = \begin{bmatrix} z_{1,1} \\ z_{2,2} \\ z_{1,2} \\ z_{2,1} \end{bmatrix} \text{ with the following convention } Z = \begin{bmatrix} z_{1,1} \\ z_{2,1} \\ z_{1,2} \\ z_{2,2} \end{bmatrix}.$$

**3.** Method according to claim 2, **characterized in that** $\tilde{R}$ is a matrix in the form of an X such that :

$$\tilde{R} = \begin{bmatrix} r_{1,1}^1 & 0 & 0 & i.r_{1,2}^1 \\ 0 & r_{2,2}^2 & r_{2,1}^2 & 0 \\ 0 & r_{1,2}^2 & r_{1,1}^2 & 0 \\ r_{2,1}^1 & 0 & 0 & i.r_{2,2}^1 \end{bmatrix} \text{ and } \tilde{\Gamma} = \frac{1}{\sqrt{5}}\begin{bmatrix} \alpha & \alpha\theta & 0 & 0 \\ \overline{\alpha} & \overline{\alpha}\overline{\theta} & 0 & 0 \\ 0 & 0 & \alpha & \alpha\theta \\ 0 & 0 & \overline{\alpha} & \overline{\alpha}\overline{\theta} \end{bmatrix},$$

$\alpha$ and $\theta$ being

the Golden Code coefficients such that: $\theta = \dfrac{1+\sqrt{5}}{2}$, $\overline{\theta} = \dfrac{1-\sqrt{5}}{2}$, $\alpha = 1 + i - i.\theta$, $\alpha = 1 + i - i.\theta$,

$\overline{\alpha} = 1 + i - i.\overline{\theta}$

4. Method according to any one of the preceding claims, **characterized in that**:

$$\Delta_\alpha(\mathbf{x}^1,\mathbf{x}^2,\mathbf{x}^3,\mathbf{x}^4) = \begin{bmatrix} \mathbf{x}^1 & 0 & 0 & \dfrac{\alpha}{\overline{\alpha}}\mathbf{x}^4 \\[2mm] 0 & \overline{\mathbf{x}}^1 & \dfrac{\overline{\alpha}}{\alpha}\overline{\mathbf{x}}^4 & 0 \\[2mm] 0 & \dfrac{\alpha}{\overline{\alpha}}\overline{\mathbf{x}}^2 & \overline{\mathbf{x}}^3 & 0 \\[2mm] \dfrac{\overline{\alpha}}{\alpha}\mathbf{x}^2 & 0 & 0 & \mathbf{x}^3 \end{bmatrix}$$

and

$$\Pi_\alpha(\mathbf{x}^1,\mathbf{x}^2,\mathbf{x}^3,\mathbf{x}^4) = \begin{bmatrix} \mathbf{x}_1^1 & \mathbf{x}_2^1 & \mathbf{x}_1^4 & \mathbf{x}_1^4 - \mathbf{x}_2^4 \\[1mm] \mathbf{x}_2^1 & \mathbf{x}_1^1 + \mathbf{x}_2^1 & \mathbf{x}_2^4 & -\mathbf{x}_1^4 \\[1mm] \mathbf{x}_1^2 + \mathbf{x}_2^2 & \mathbf{x}_1^2 + 2.\mathbf{x}_2^2 & \mathbf{x}_1^3 + \mathbf{x}_2^3 & -\mathbf{x}_2^3 \\[1mm] -\mathbf{x}_2^2 & -\mathbf{x}_1^2 - \mathbf{x}_2^2 & -\mathbf{x}_2^3 & \mathbf{x}_1^3 \end{bmatrix}$$

where $\forall j\ 1 \leq j \leq 4$ ) $\mathbf{x}^j = \mathbf{x}_1^j + \theta \mathbf{x}_2^j$ ($\mathbf{x}_1^j$ and $\mathbf{x}_2^j \in \mathbf{Z[i]}$).

5. Method according to any one of claims 1 to 4, **characterized in that** $\Delta_\alpha$ is determined such that, during a QR decomposition, both elements of a single layer are substantially of the same value.

6. Method according to any one of claims 1 to 5, **characterized in that** $\tilde{Z}$ is defined as two layers, a first layer consisting of elements on the diagonal and a second layer consisting of elements on the anti-diagonal, and **in that** $\Delta_\alpha$ is determined such that, during a QR decomposition, the product of the two elements of the second layer is greater than the product of the two elements of the first layer.

7. Method according to any one of the preceding claims, **characterized in that** $\tilde{Z}$ is defined as two layers, a first layer composed of elements on the diagonal and a second layer composed of elements on the anti-diagonal, and **in that** during application of the ZF algorithm for the second layer, p possible candidates are extracted, then for the first layer p possible candidates are also extracted and then the best candidate vector is determined.

8. Method according to claim 7, **characterized in that** p is equal to 2.

9. Method according to claim 1, **characterized in that** $\tilde{R}$ and $\Delta_\alpha$ are X matrices.

10. Method according to claim 1, **characterized in that** $\tilde{R}$ and $\Delta_\alpha$ are diamond matrices.

**Patentansprüche**

1. Verfahren zur Decodierung eines Vektors Y von 2x2-Raum-Zeit-Codes vom Typ Golden Code, wobei das Verfahren die folgenden Schritte umfasst:

   - man nimmt eine MMSE-GDFE-Filterung so vor, dass man einen Vektor $Y^F$ = RX + W erhält, worin $Y^F$ der Vektor Y, der mit Hilfe einer "forward filter" genannten Filtermatrix F gefiltert ist, R eine herkömmliche, "backward filter" genannte Matrix, X der gesendete Vektor und W die komplexe Rauschmatrix ist,
   - man nimmt eine Konstellationsrezentrierung so vor, dass der zu bestimmende Vektor Z wird, und zwar so, dass Z = $Y^F$ - $2K_M R\Gamma S_0$ = $2K_M R\Gamma S$ + W, worin $K_M$ die Normalisierungskonstante der betreffenden Konstellation, $\Gamma$ der Golden Code und S der Vektor der Informationssymbole ist,
   - man führt einen Schritt der Permutation der Elemente der Matrizes Z, R und $\Gamma$ so aus, dass man $\widetilde{Z}$, $\widetilde{R}$ und $\widetilde{\Gamma}$ erhält, und zwar so, dass $\widetilde{R}^H R$ eine Matrix in Form von X ist, und man bewegt die komplexe Zahl von $\Gamma$ nach R, und
   - man führt einen solchen Gitterbasisreduktionsschritt aus, dass $\widetilde{Z}$ = $2K_M \Psi\Gamma S'$+W ist, worin $\widetilde{\Psi}$ = $\widetilde{R}.\Delta_\alpha(x^1, x^2, x^3, x^4)$ und S' = $\Pi_\alpha^{-1}(x^1, x^2, x^3, x^4) . S$ ist, wobei $\Pi_\alpha(x^1, x^2, x^3, x^4)$ eine Basiswechselmatrix ist,
   
   $\Pi_\alpha(x^1, x^2, x^3, x^4)$ die Matrix ist,
   
   die $\Delta_\alpha(x^1, x^2, x^3, x^4)$ zugeordnet ist, die eine Matrix ist, deren Determinantenmodul gleich 1 ist und die so definiert ist, dass $\Delta_\alpha^H\Delta_\alpha$ eine Matrix in Form von X ist,
   - man wendet den ZF-DFE-Decodierungsalgorithmus an, in dem man unter den vier Elementen von $\widetilde{Z}$ zwei Schichten, auch "layers" genannt, identifiziert, wobei jede Schicht die beiden Elemente der Diagonale oder die Antidiagonale von $\widetilde{Z}$ umfasst; man wendet den DFE-Algorithmus Schicht für Schicht an und man wendet den ZF-Algorithmus im Inneren jeder der Schichten an.

2. Verfahren nach Anspruch 1, **dadurch gekennzeichnet, dass** die Permutation von $\widetilde{Z}$ die folgende ist:

$$\widetilde{Z} = \begin{bmatrix} Z_{1,1} \\ Z_{2,2} \\ Z_{1,2} \\ Z_{2,1} \end{bmatrix} \text{ mit der fo lg enden Konvention } Z = \begin{bmatrix} Z_{1,1} \\ Z_{2,1} \\ Z_{1,2} \\ Z_{2,2} \end{bmatrix}$$

3. Verfahren nach Anspruch 2, **dadurch gekennzeichnet, dass** $\widetilde{R}$ eine solche Matrix in Form von X ist, dass:

$$\widetilde{R} = \begin{bmatrix} r_{1,1}^1 & 0 & 0 & i.r_{1,2}^1 \\ 0 & r_{2,2}^2 & r_{2,1}^2 & 0 \\ 0 & r_{1,2}^2 & r_{1,1}^2 & 0 \\ r_{2,1}^2 & 0 & 0 & i.r_{2,2}^1 \end{bmatrix} \text{ und } \widetilde{\Gamma} = \frac{1}{\sqrt{5}} \begin{bmatrix} \alpha & \alpha\theta & 0 & 0 \\ \overline{\alpha} & \overline{\alpha}\overline{\theta} & 0 & 0 \\ 0 & 0 & \alpha & \alpha\theta \\ 0 & 0 & \overline{\alpha} & \overline{\alpha}\overline{\theta} \end{bmatrix},$$

wobei $\alpha$ und $\theta$ solche Golden-Code-Koeffizienten sind, dass: $\theta = \frac{1+\sqrt{5}}{2}, \overline{\theta} = \frac{1-\sqrt{5}}{2},$ $\alpha = 1 + i - i.\theta, \overline{\alpha} = 1$ + i - i.$\overline{\theta}$.

**4.** Verfahren nach einem der vorhergehenden Ansprüche, **dadurch gekennzeichnet, dass**

$$\Delta_\alpha(x^1, x^2, x^3, x^4) = \begin{bmatrix} x^1 & 0 & 0 & \dfrac{\alpha}{\overline{\alpha}} x^4 \\ 0 & \overline{x}^1 & \dfrac{\overline{\alpha}}{\alpha} \overline{x}^4 & 0 \\ 0 & \dfrac{\alpha}{\overline{\alpha}} \overline{x}^2 & \overline{x}^3 & 0 \\ \dfrac{\overline{\alpha}}{\alpha} x^2 & 0 & 0 & x^3 \end{bmatrix}$$

und

$$\Pi_\alpha(x^1, x^2, x^3, x^4) = \begin{bmatrix} x_1^1 & x_2^1 & x_1^4 & x_1^4 - x_2^4 \\ x_2^1 & x_1^1 + x_2^1 & x_2^4 & -x_1^4 \\ x_1^2 + x_2^2 & x_1^2 + 2.x_2^2 & x_1^3 + x_2^3 & -x_2^3 \\ -x_2^2 & -x_1^2 - x_2^2 & -x_2^3 & x_1^3 \end{bmatrix}$$

oder $\forall j\; 1 \leq j \leq 4$   $x^j = x_1^j + \theta.x_2^j$  ($x_1^j$  und  $x_2^j \in \mathbf{Z[i]}$).

**5.** Verfahren nach einem der Ansprüche 1 bis 4, **dadurch gekennzeichnet, dass** man $\Delta_\alpha$ so bestimmt, dass bei einer QR-Zerlegung die beiden Elemente derselben Schicht im Wesentlichen vom selben Wert sind.

**6.** Verfahren nach einem der Ansprüche 1 bis 5, **dadurch gekennzeichnet, dass** $\widetilde{Z}$ in zwei Schichten definiert wird, einer ersten Schicht, die aus den Elementen auf der Diagonale zusammengesetzt ist, und einer zweiten Schicht, die aus den Elementen auf der Antidiagonale zusammengesetzt ist, und dass man $\Delta_\alpha$ so bestimmt, dass bei einer QR-Zerlegung das Produkt der beiden Elemente der zweiten Schicht größer als das Produkt der beiden Elemente der ersten Schicht ist.

**7.** Verfahren nach einem der vorhergehenden Ansprüche, **dadurch gekennzeichnet, dass** $\widetilde{Z}$ in zwei Schichten definiert wird, einer ersten Schicht, die aus den Elementen auf der Diagonale zusammengesetzt ist, und einer zweiten Schicht, die aus den Elementen auf der Antidiagonale zusammensetzt ist, und dass man bei der Anwendung des ZF-Algorithmus bei der zweiten Schicht p mögliche Kandidaten extrahiert und dann bei der ersten Schicht ebenfalls p mögliche Kandidaten extrahiert und man dann den besseren Vektorkandidat bestimmt.

**8.** Verfahren nach Anspruch 7, **dadurch gekennzeichnet, dass** p gleich 2 ist.

**9.** Verfahren nach Anspruch 1, **dadurch gekennzeichnet, dass** $\widetilde{R}$ und $\Delta_\alpha$ X-Matrizes sind.

**10.** Verfahren nach Anspruch 1, **dadurch gekennzeichnet, dass** $\widetilde{R}$ und $\Delta_\alpha$ Rautenmatrizes sind.

**UNIQUE FIGURE**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. C. Belfiore ; G. Rekaya ; E. Viterbo.** The Golden Code: A 2x2 Full-Rate Space-Time Code with Non-Vanishing Determinants. *IEEE Trans. Inform. Theory,* Avril 2005
- **J. Foschini ; G. Golden ; R. Valenzuela ; P. Wolniansky.** Simplified processing for high spectral efficiency wireless communication employing multi-element arrays. *IEEE Journal on Selected Areas Communications,* Novembre 1999, vol. 17, 1841-1852
- **A. D. Murugan ; H. El Gamal ; M. O. Damen ; G. Caire.** A Unified Framework for Tree Search Decoding : Rediscovering the Sequential Decoder. *IEEE Transactions on Information Theory,* Mars 2006, vol. 52 (3
- **H. Cohen.** A Course in Computational Algebraic Number Theory. Springer, 1996